(19) **Europäisches Patentamt / European Patent Office / Office européen des brevets**

(11) **EP 2 467 695 B1**

(12) # EUROPEAN PATENT SPECIFICATION

(45) Date of publication and mention
of the grant of the patent:
**25.07.2018 Bulletin 2018/30**

(21) Application number: **10744886.2**

(22) Date of filing: **11.08.2010**

(51) Int Cl.:
**G01N 1/31** *(2006.01)*      **G01N 1/44** *(2006.01)*

(86) International application number:
**PCT/EP2010/004892**

(87) International publication number:
**WO 2011/020574 (24.02.2011 Gazette 2011/08)**

(54) **APPARATUS AND METHOD FOR ACCELERATED TISSUE INFILTRATION BY MEANS OF MICROWAVE EXCITATION**

VORRICHTUNG UND VERFAHREN FÜR BESCHLEUNIGTE GEWEBEINFILTRIERUNG MITTELS MIKROWELLENERREGUNG

APPAREIL ET PROCÉDÉ POUR UNE INFILTRATION TISSULAIRE ACCÉLÉRÉE AU MOYEN D'UNE EXCITATION MICRO-ONDE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.08.2009   US 543226**

(43) Date of publication of application:
**27.06.2012   Bulletin 2012/26**

(73) Proprietor: **Leica Biosystems Nussloch GmbH**
**69226 Nussloch (DE)**

(72) Inventors:
• **SANDERS, Mark**
**Falcon Heights**
**Minnesota 55113 (US)**

• **ULBRICH, Hermann**
**76669 Bad-schoenborn (DE)**

(74) Representative: **Stamer, Harald**
**Jahnstrasse 7**
**35579 Wetzlar (DE)**

(56) References cited:
**WO-A1-2008/044012      DE-A1-102007 008 713**
**US-A- 5 068 086      US-A1- 2002 177 183**

• **M.E. BOON, L.P: KOK: "Microwaves for Immunohistochemistry", MICRON, vol. 25, no. 2, 1994, - 1994, page 151-170, XP002614117,**

## Description

The invention relates to an apparatus and method for accelerated tissue infiltration by means of microwave excitation as it is particularly applied in microtomes or other devices analyzing tissue samples, for instance in the field of histological diagnostics. For this purpose, tissue samples are processed through a single or a plurality of steps for preparation of a tissue sample for microscopy and/or conservation. This processing can be conducted prior to cutting the tissue samples into thin slices that are appropriate for viewing under a microscope. Typical steps are fixation, dehydration, dying, for instance with a fluorescent dye for fluorescence microscopy, paraffinating, etc. These steps require that respective reagent fluids infiltrate the tissue sample.

It is known from the prior art to control the temperature of the reagent fluid during infiltration, a reagent exchange takes place at the interface with the tissue, and thus the rate of tissue infiltration is accelerated by (among other factors) heating the reagents with thermal radiation, a heating element, and/or microwaves. The increase in infiltration is referred to as the RRT (reaction - rate - temperature) rule. A rule of thumb states that for a 10 °K temperature rise, a doubling of, in this case, the molecules penetrating into a tissue takes place. For instance, the German patent applications DE 102007008713 and DE 102007044116 mention in general the use of microwaves as an efficient heat source for accelerated reagent heating. However, in the prior art, microwave excitation was merely used as a heat source.

Typically, most tissue samples are located in tissue cassettes. The cassettes are integrated into a cassette holder. During processing, the cassette holder is located in a reaction chamber together with the corresponding reagent (= dielectric). The reagent is heated by microwave excitation, but the cassettes are arranged outside the region of any significant absorption of the electromagnetic field. In other words, the specific penetration depth PD of the microwave radiation into a dielectric is not utilized in order to accelerate tissue infiltration, since the tissues are located deeper inside a chamber than the specific penetration depth. Even in case some tissues might have been exposed to some stray irradiation of minor intensity, this was an insignificant and undesired side effect and if at all applied only to very few tissue samples in a respective batch so that the effect could not be factored into the processing time of the entire batch.

From the German patent application DE 102007008713 A1 a tissue infiltration system according to the precharacterizing part of claim 1 and a method for infiltrating according to the precharacterizing part of claim 6 are known.

It is an object of the invention to accelerate infiltration of the tissue sample with a variety of reagent fluids. It is further an object to achieve uniform infiltration results in a batch comprising several different tissue samples.

This is achieved by the tissue infiltration system according to claim 1, and the method for infiltrating a first dielectric fluid into a tissue sample according to claim 6. Advantageous further embodiments are claimed in the dependent claims 2 - 5 and 7 -8.

In this connection, the number e is the Euler's number, namely 2.718281828459, so that the inverted value 1/2.718281828459 is close to 37%.

The holding element and the reaction chamber are rotatable with respect to each other such that the tissue sample passes the window section at every round in a distance that is shorter than 3PD. In an example,which is not comprised within the scope of the present invention, it would also be possible that the holding element is fixed and the reaction vessel with the microwave system rotates around the holding element, or that both the reaction vessel and the holding element rotate. However, for limiting the number of rotating elements, it is preferred that the holding element rotates and the reaction chamber is fixed.

Preferably, the bottom is round and the wall is a regular cylinder having a central axis of symmetry. Even though any shape works for the reaction vessel, for instance square or rectangular when viewed from the top, a round shape and a regular cylinder work well and are easy to manufacture.

Preferably, the window section is rectangular having a long and a short edge, the long edge extending substantially vertically in parallel to the axis of symmetry and the short edge extends substantially circumferentially. Again, any shape of the window section works. One particularly advantageous alternative would be to design the window section as a regular cylinder segment. However, for easier manufacturing, it might be preferable to have a rectangular shape and embed this shape into the circular cylinder wall. Even though this rectangular shape of the window section might not be perfectly snug with the circular cylinder shaped side wall, for the penetration of the microwaves through the window section into the interior of the reaction vessel into the reaction chamber, the shape of the window section is of minor influence. The holding device has a central axle of rotation and is adapted to be inserted into the reaction chamber so that the central axle of rotation rotates substantially around the axis of symmetry of the reaction chamber, and the central axle of rotation is connected to a drive mechanism rotating the holding device in the reaction chamber when infiltrating the tissue sample. In the alternative, it would be possible to turn the holding device incrementally and intermittently, and in an example which is not under the scope of the present invention, manually by an operator. However, for a more uniform irradiation, a constant rotation is helpful. According to an example which is not part of the scope of the present invention, for achieving a somewhat uniform irradiation without needing a driving and rotating mechanism would be to provide several window sections on the circumference of the reaction vessel and irradiating microwaves through all of these window sections, for instance simultaneously or sequentially. For instance, according to an example, providing six or more window sections would achieve already a somewhat uniform irradiation. Another viable alternative which is not part of the scope of the present invention, would be to manufacture the entire reaction vessel of a material that is relatively transparent for microwaves, ideally quartz, but for cost reasons also glass would be an acceptable alternative within certain intensity ranges. Another very beneficial material is Teflon®, i.e. polytetrafluoroethylene (PTFE) or other materials that exhibit electronegativity as a microwave transparent material. Teflon has the advantage to be heat resistant and at the same time resistant against breaking. The complexity for irradiating microwaves from various locations on the circumference of the reaction vessel has to be weighed against the complexity for a mechanism rotating the holding device and/or the reaction vessel. One major advantage of irradiating from various locations simultaneously in a radial direction would be that this would eliminate all mechanical movement and therefore any mechanical friction, wear and risk of failure. On the downside, there would be less fluid movement and therefore not the same amount of flow around the tissue samples that actually helps with infiltration. This fluid movement could however in a stationary system without rotation of the transport basket be created by separate fluid movement means such as pumps or stirring elements.

Preferably, the microwave irradiation has a frequency of 2.45 GHz. Even though other frequencies are possible and depending on the respective dielectric might be even more efficient, 2.45 GHz is the standard household frequency that is available and admissible as a standard microwave frequency in most countries. Therefore, this frequency offers also the biggest selection of commercially available microwave systems.

By exposing the tissue sample to direct microwave irradiation, the electromagnetic field reverses its direction in the tissue 2.45 billion times per second. This creates a micro-oscillation of the tissue molecules. Surprisingly, this enhances the infiltration speed significantly, depending on the dielectric that is infiltrated into the tissue. In case of formaldehyde, this may result even in a 20-fold acceleration.

Since the acceleration will, depending on the dielectric, be accelerated by said micro-oscillation, depending on the dielectric to be infiltrated, heating of the dielectric might actually be an undesired side effect. In this case, cooling has to be provided, for instance by electric cooling elements or by channels conducting a coolant in a wall of the reaction vessel or by an electric cooling element in contact with the reaction vessel for compensating for the inadvertent heating of the dielectric.

In the alternative, in case of the dielectrics that are not so easily heated by the microwaves, for instance paraffin, an additional heating element might be preferably provided, for instance a convective heater is provided for heating the dielectric to a predetermined temperature.

For optimizing of the processing speed to the maximum possible speed, it is also important that the dielectric is very specifically chosen so that the processing parameters, predominantly the intensity of direct microwave irradiation of the tissue and the temperature of the dielectric during the infiltration process, fit exactly for this particular dielectric. For this reason, the system might be designed as a closed system that has been prefilled with the particular dielectric or comprise several reaction vessels with respective dielectric. According to one example, which is not part of the scope of the present invention, only one reaction vessel might be provided and one or more storage tanks are provided holding various dielectrics. The reaction vessel can then be emptied through a conduit after a particular processing step of infiltration has been completed, and can then be re-filled from one of the storage tanks with a different dielectric for the next processing step of infiltration. In the present invention several reaction vessels are provided that are pre-filled with various dielectrics, and the samples to be infiltrated can be moved from one reaction vessel to the next for the next processing step in sequence.

In the following, the invention is described in more detail by referring to the drawings:

Figure 1 shows an explosive perspective view of the tissue infiltration apparatus according to an example which is not part of the present invention;

Figure 2 shows a perspective view of the assembled tissue infiltration apparatus according to an example which is not part of the present invention;

Figure 3 shows a schematic view of a tissue infiltration system according to the present invention.

Figure 4 shows a transport basket holding several samples in a plurality of cassettes and segments.

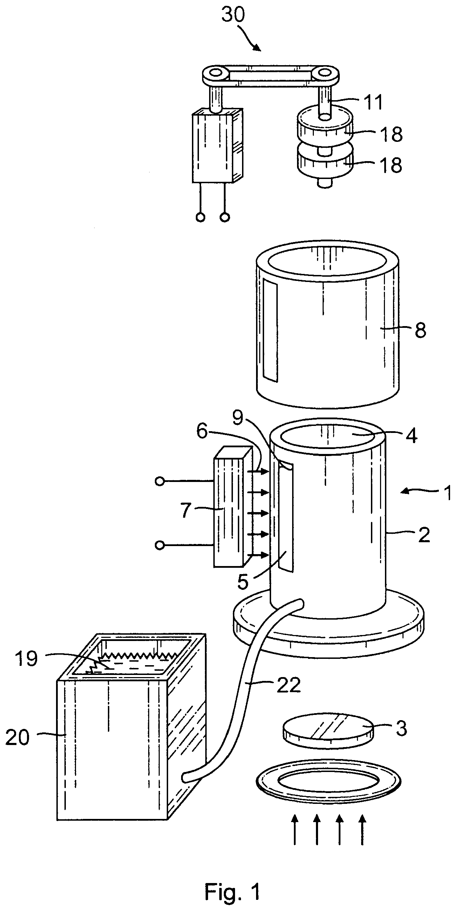

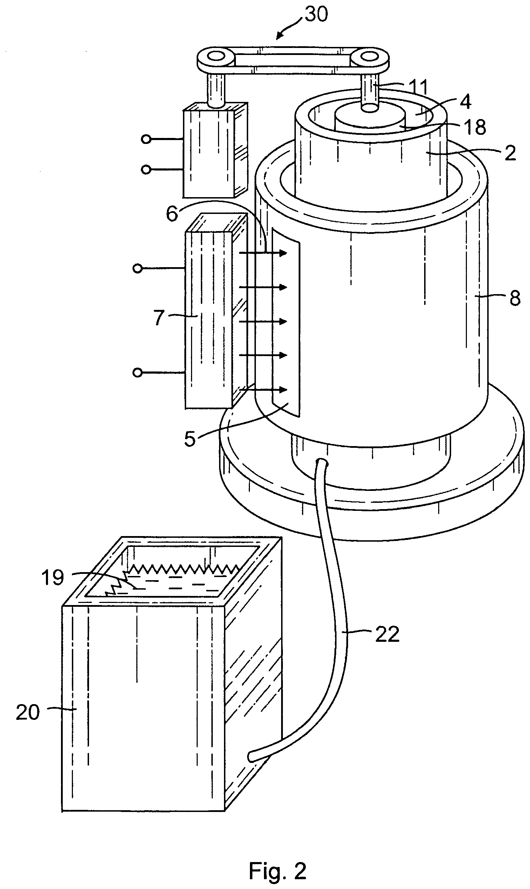

The tissue infiltration apparatus as shown in figures 1 and 2 comprises a reaction vessel 1 that can be generally of any shape but is preferably, as in this particular embodiment, designed as a regular cylinder having a side wall 2 and a bottom 3. The bottom 3 may be made of a material that is transparent for microwaves, or the material may be opaque as to microwaves, depending on whether any additional microwave or other heat generating irradiation like infrared irradiation is intended penetrating of the bottom in axial direction of the reaction vessel 1.

The side wall 2 is provided with a transparent window section 5 that is transparent to microwaves 6 that are schematically depicted by arrows. These microwaves can be generated and irradiated by the microwave system 7 and penetrate through the transparent window section 5 into the reaction chamber 4. The transparent window section 5 is rectangular and is typically made from quartz since quartz is transparent with respect to microwaves.

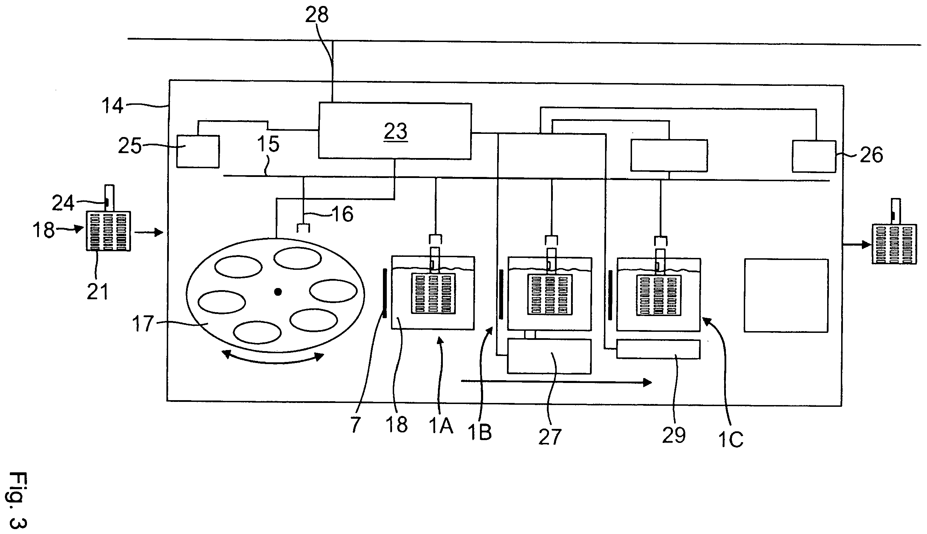

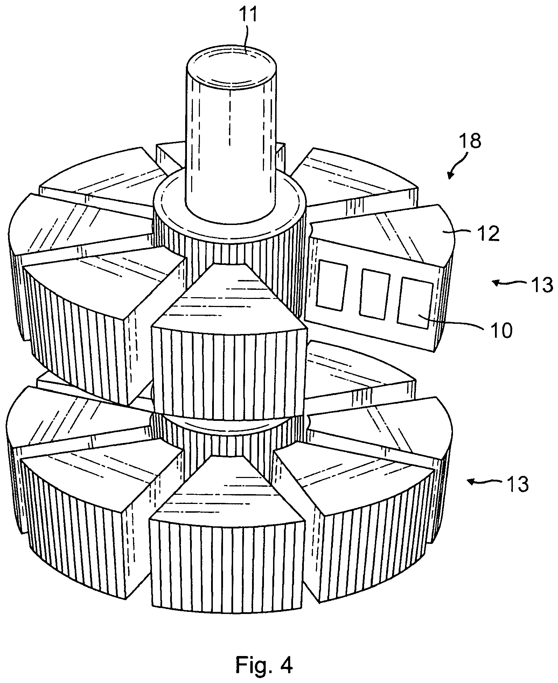

The reaction vessel 1 is encapsuled either entirely or in part by a cylindrical heating-and-cooling unit 8 that is in heat conductive contact with the side wall 2 of the reaction vessel 1. The side wall 2 of the reaction vessel 1 is also made of heat conductive material. This way, the dielectric 19 inside the reaction vessel 1 and contained in the reaction chamber 4 can be heated or cooled so that a predetermined temperature of the dielectric 19 can be achieved and maintained. The upper level of the dielectric 19 is denoted with the fluid surface level line 9 that is visible through the quartz window section 5. The tissue samples are held in one or more transport baskets 18 that when submerged in the dielectric 19, can be rotated by a drive mechanism 30 via a rotational axle 11. The transport baskets are made of microwave transparent material. Any microwave transparent material might be used. Teflon® (polytetrafluoroethylene (PTFE)) exhibiting electronegativity as a microwave transparent material would be particularly suitable as resistant against breaking and heat. Figure 3 shows a schematic view of an entire closed tissue infiltration system comprising several reaction vessel 1. The tissue samples 21 that are held in the transport basket 18 that is shown in more detail in figure 4. In this embodiment, up to sixty samples can be held in one transport basket 18. Within the transport basket 18, the samples 21 are held in cassettes 10 that are shown in more detail in figure 4. One or more transport baskets 18 are held on the rotational axis axle 11. The cassettes 10 are held in several segments 12, and several layers 13 can be held on the rotational axle 11. More details can be gathered from the German Patent Application DE 102007044116. The transport basket is particularly shown in figures 5-7 of publication DE 102007044116.

Figure 3 shows schematically that the entire transport basket 18 is submerged into the various dielectrics 19, namely submerged entirely below the various dielectric surface levels 9. The entire system of the embodiment shown in figure 3 is closed as it is symbolized by the schematically shown casing 14. A transport mechanism 15 is provided, particularly a transport arm 16 that can grip the various transport baskets 18. Several of these transport baskets 18 can be held in a carousel 17 and transported one by one into the various dielectric containing reaction vessels 1. The dielectric fluids 19 might be custom designed and be pre-filled into the various reaction vessels 1. This allows for more consistent testing results and is another measure for a better control about the required processing time within each one of the dielectrics.

As an alternative, which is not part of the scope of the present invention, to a closed system with a transport mechanism and multiple reaction vessel 1 holding different dielectrics, it is also possible to have a standalone solution as for instance shown in figure 1. In this case the transport basket 18 can be inserted into the reaction chamber 4 either manually or automatically by a transport mechanism 15. In this case, it is also possible to insert the transport basket 18 prior to adding the dielectric 19. It is also possible to remove the dielectric 19 through a conduit 22 and replace it by feeding a different dielectric 19 into the same reaction vessel 1. Also in case of a single reaction vessel solution, a closed system is possible, wherein the various dielectrics are held in different storage vessels 20, and these are pumped from said storage vessels 20 into the reaction vessel 1 and vice versa out of the reaction vessel 1 through said conduit 22 either for disposing the dielectric fluid 19 or by pumping it back into the storage vessel 20, possibly after a cleaning process. In all three variances of the system, namely a fully closed system as shown in figure 3 with several reaction vessels 1 and a transport mechanism 15 transporting the transport baskets 18 into the various reaction vessel 1, or a closed system with the various storage containers 20 for storing a plurality of different dielectrics as shown in figure 1, or the same system as shown in figure 1 but designed as an open system, the infiltration method according to the invention follows the following procedure:

1. The samples are prepared and placed in the various cassettes 10 that are held by segments 12 of the transport basket 18 and affixed to the transport axle 11. In this manner, a transport basket 18 is fully charged with the samples, for instance sixty different samples held in sixty cassettes 10, respectively.

2. After the transport baskets 18 are loaded, these are moved into a reaction vessel 1 that is either pre-filled with a dielectric, or is filled with the dielectric after the transport basket 18 has been inserted into the reaction chamber 4 of the reaction vessel 1.

3. The transport baskets 18 are set into rotation by a drive mechanism rotating the transport baskets and therefore the samples within the dielectric 19. At this point in time, the transport basket 18 and therefore all samples are fully submerged in the dielectric, i.e. submerged below the dielectric surface level 9.

4. Microwave irradiation 5 is irradiated into the reaction chamber 4 by the microwave system 7 through the quartz window section 5. The samples pass set quartz window section 5 at every round within a distance that is shorter than 3xPD, wherein PD is the penetration depth of the microwaves into the dielectric and is defined as the distance at which the microwave irradiation intensity has been reduced from the initial intensity to a value of 1/e, i.e. to about 37%. A list for various dielectrics and of their correlating penetration depth PD is discussed below. The samples are exposed to direct microwave irradiation, having a direct influence on accelerating the infiltration.

5. Optionally, i.e. if necessary, the dielectric can be heated or cooled by the cylindrical heating-and-cooling unit 8. Heating is applied if the volume of the dielectric is so high that it would take an excessive period of time for the microwaves to heat up the dielectric, or if the dielectric is difficult to be heated up by microwaves, for example paraffin. In the alternative, a cooling process is conducted if in contrast the volume is low so that the dielectric is heated up very quickly, and/or if the dielectric generally has the properties of being heated up quickly by microwaves, for instance strong dipole fluids like water. Even though the microwaves irradiate the samples directly and therefore use a direct infiltration action, it is also possible that a certain optimum processing temperature of the dielectric is maintained for avoiding any damage of the sample, for instance due to excessive heat, or in contrast compromise the processing speed by having a dielectric temperature that is too low.

6. After the appropriate processing time for infiltrating with a particular dielectric has passed wherein the samples have been irradiated directly with microwaves with a controlled intensity while at the same time the temperature of the dielectric has been controlled by the same microwave irradiation in combination with the heating-and-cooling element 8, the transport basket 18 with the samples is moved out of the reaction vessel 1 or in the alternative the dielectric is removed from the reaction vessel 1.

7. Steps 1.-6. can be repeated as often as necessary with the various dielectrics and with various processing parameters such as the dielectric temperature, intensity of the microwave irradiation 6, and distance guiding the samples repeatedly past the quartz window section 5 exposing these to direct microwave irradiation 6.

The method according to the invention can be used by processing a sample in one single dielectric, i.e. infiltrating only one single dielectric into the tissue sample. However, typically, several different dielectrics are used in a sequence resulting in various subsequent infiltration steps. A "dielectric" refers to any nonmetallic substance, having little or no electrical conductivity, whose charge carriers are not free to move. These materials have electrical or electromagnetic fields applied to them. Upon penetration into a dielectric, microwave radiation results in heating thereof. This occurs due to the absorption of energy. At the same time, an electromagnetic field that reverses direction 2.45 billion times per second occurs.

An aqueous formalin solution, as well as a variety of alcohols such as methanol, ethanol, and isopropanol, are dielectrics that are usually utilized in tissue processing with microwave excitation. The penetration depth PD is defined as the depth at which the original field strength has decreased to 1/e (approximately 37%). This means that microwave heating still takes place beyond the penetration depth, but the quantity of energy for heating there is much smaller.

$$PD = \frac{\lambda_0}{2\pi} \cdot \frac{\sqrt{\varepsilon'}}{\varepsilon''}$$

PD = Microwave penetration depth
$\lambda_0$ = Wavelength in vacuum (= 12.25 cm)
$\varepsilon'$ = Real part of complex dielectricity coefficient
$\varepsilon''$ = Imaginary part of complex dielectricity coefficient

The penetration depth PD depends on the particular dielectric and its temperature. Many materials (e.g. quartz glass) have a very large penetration depth; they are "transparent" to microwave radiation. One rule of thumb states that the hotter the dielectric, the greater its PD. Consider, for example, the PD of water at 25, 50, and 75°C:

| Material/dielectric ($\lambda_0$= 12.25 cm; 2.45 GHz) | $\varepsilon'$ | $\varepsilon''$ | Temp (°C) | PD (cm) |
|---|---|---|---|---|
| Quartz glass | 3.78 | 0.0002 | 25 | 18937 |
| Water H20 | 77.4 | 9.2 | 25 | 1.87 |
| Water H20 | 69.4 | 4.9 | 50 | 3.3 |
| Water H20 | 62.3 | 2.6 | 75 | 5.9 |
| Ethanol | 8 | 7.5 | 25 | 0.8 |
| Methanol | 24 | 13.5 | 25 | 0.7 |

(continued)

| Material/dielectric ($\lambda 0$= 12.25 cm; 2.45 GHz) | $\varepsilon$' | $\varepsilon$" | Temp (°C) | PD (cm) |
|---|---|---|---|---|
| Propanol | 5 | 3.5 | 25 | 1 |
| Methyl alcohol | 24 | 15 | 25 | 0.6 |

A typical sequence of subsequently infiltrated dielectrics is:

1. Fixation

The tissue sample is typically fixed by a fixing agent. As a fixing agent, typically a fluid, is used that has the ability of penetrating the plasma membrane quickly. Since the microwaves make the tissue perform micro-oscillation, the infiltration process is significantly accelerated by irradiating the tissue sample directly with microwaves, for instance accelerated to be 20-fold compared to infiltration as without direct microwave irradiation. The formaldehyde or formalin infiltration process typically takes place at the temperature of 20-25 degrees Celsius. Typically, above 25 degrees Celsius, crosslinking of the tissue proteins takes place. Such crosslinking might be desirable. However, prior to crosslinking, proper infiltration has to be completed at a preferred temperature between 20-25 degrees Celsius (68 - 77 degrees Fahrenheit). Since the microwaves themselves have a tendency of heating up the dielectric formaldehyde or formalin quickly, the heating-and-cooling unit 8 can control the temperature to be below 25 degrees Celsius (77 degrees Fahrenheit) during the fixation process involving according to the invention direct microwave irradiation of the tissue samples.

2. Dehydration

For many applications, the tissue sample has to be fully dehydrated. Typically, a dielectric such as various alcohols is used, for instance isopropanol or ethanol. Isopropanol infiltrates best at a temperature of 60 degrees Celsius (140 degrees Fahrenheit) into the tissue sample, while ethanol infiltrates best into the tissue sample at a somewhat lower temperature, particularly 40 degrees Celsius (104 degrees Fahrenheit). Again, by directly irradiating the tissue sample, the infiltration speed is accelerated, for instance to be quadrupled in comparison with infiltration not irradiating of the tissue samples directly with microwaves. This effect of acceleration the infiltration can be explained by the micro-oscillation of the tissue that is directly exposed to microwave irradiation. Since microwave irradiation tends to heat up isopropanol or ethanol very quickly, counter-cooling by the heating-and-cooling unit 8 might be advantageous. Also, for reaching the most advantageous infiltration temperature, the heating-and-cooling unit 8 can help heating up the dehydration dielectric to the most favored processing temperature.

3. Intermedium infiltration

After proper dehydration, infiltration with an intermediate is necessary if a subsequent paraffinating step is desired. Some dielectrics fulfill both functions of dehydration and providing an appropriate intermedium for paraffin infiltration, for instance isopropanol. It is also possible to provide a mixture of dielectrics comprising an intermedium. However, other dehydration dielectrics such as ethanol are not appropriate intermediums. Again, for infiltrating in intermedium into the tissue sample, infiltration is accelerated by irradiating of the tissue sample directly with microwaves.

4. Paraffinizing

While paraffin is not heated up by microwaves easily since it is not a strong dipole-molecule, micro-oscillation of the tissue samples by direct microwave irradiation helps particularly with acceleration in infiltrating paraffin into the tissue sample. Again, the optimum processing temperature can be maintained by the heating-and-cooling unit 8, and the paraffin that is a little harder to heat up by microwaves can be heated up by convection by means of the heating-and-cooling unit prior to starting and during the paraffinizing process.

In the following, it is referred to figure 3 in more detail. As already discussed above, Figure 3 resembles a closed system comprising a plurality of reaction vessels 1. Particularly, the reaction vessel 1A comprises formaldehyde as a dielectric for performing of the fixation step, reaction vessel 1B comprises isopropanol for performing both the step of dehydration and infiltration with an intermedium, and reaction vessel 1C comprises paraffin as a dielectric for performing the step of paraffinizing.

An input station accordingly is embodied in the form of the carousel 17 and serves simultaneously as a storage unit and as means for definable modification of the order of multiple transport baskets 18. The carousel 17 comprises six individual receiving positions into each of which a transport basket 4 can be placed. An operator transfers one or more of the transport basket 18 into the carousel 17. Likewise, the transport arm 16 can remove the transport basket 18 from the carousel 17. A transport basket 18 transferred to carousel 17 can be stored therein by the fact that carousel 17 rotates a different receiving position to the input or output position.

When a transport basket 18 is to be placed, it is transported into the respective position of carousel 17. The three transport baskets 18 that are shown are located in reaction vessels 1A, 1B, 1C. At the next station change of transport baskets 18, transport basket 18 present in reaction vessel 1A is delivered by transport arm 16 into an output position of the carousel 17. The carousel 17 is then rotated one position to the right, so that transport basket 18 requiring processing next is delivered to output position. A transport arm 16 then delivers transport basket 18 into reaction vessel 1A. At the next station change, the transport baskets present in reaction vessels 1A, 1B and 1C are then each moved one position further in execution sequence fixation, dehydration/intermedium and paraffinizing and the transport basket 18 that is still in carousel 17 can be delivered either back into reaction vessel 1A or, as soon as it is unoccupied, into reaction vessel 1B. In this manner, it is also possible that transport basket 18 requiring urgent processing can be brought one position ahead of the other transport basket 18 in execution sequence, so that the order of transport baskets 18 has been modified.

According to a preferred embodiment, the cassettes 10 and/or a transport basket 18 respectively comprise(s) an identifying means. The identifying means makes possible identification of the cassettes and/or of the transport basket. The identifying means could be a barcode or a machine-readable imprint or a transponder or radio frequency identification (RFID) tag. Provision could be made that the present location or position of a cassette or of a transport basket within the tissue infiltration apparatus is ascertainable on the basis of the identifying means. The remaining treatment time of a cassette or of a transport basket could also be ascertainable on the basis of the identifying means. This feature can be helpful if a specimen or cassette must be accessed at an earlier time than expected, in which case the specimen can be processed manually.

The order of the transport baskets could be ascertainable, and optionally modifiable, as a function of the identification of the cassettes and/or the transport basket. In addition to the information concerning identification of the cassette or transport basket, information could also be provided regarding the type of processing of the specimens in the tissue infiltration apparatus, which information either is stored in suitable fashion in the identifying means or is transmitted, for example, via a network to the tissue infiltration apparatus, if identification of the respective cassette or transport basket is performed. A reading device, with which the identifying means of the cassettes or the transport basket can respectively be read, would need to be provided for this purpose in the tissue infiltration apparatus. This information could be conveyed to a control unit 23 of the tissue infiltration apparatus. The control unit 23 could be configured in such a way that as a function of the information ascertained for the cassettes 10 or the particular transport basket 18, the execution sequence of the individual transport baskets (and thus of the cassettes) through the reaction vessels 1A, 1B and 1C of the tissue infiltration apparatus is managed in variable fashion, or in a manner optimized for a definable processing goal. One such processing goal could be a shortest possible processing time for the cassettes in the tissue infiltration apparatus. A further processing goal could be a special execution sequence for a specific type of specimen.

It is indicated merely schematically that the identifying means, embodied in the form of a transponder 24, is provided on each transport basket 18. Information about the identity of transport basket 18, as well as cassettes 10 and therefore the specimens (not shown) contained therein, can be stored in the identifying means. Information can additionally be stored in transponder 24 about the processing steps with which the samples are to be, or have been, processed. Information concerning prioritization of the processing of the individual specimens present in transport basket 18, or about transport baskets 18, can also be stored in transponder 24. The information stored in transponder 24 can be read out in non-contact fashion with reading unit 25, and transmitted to control unit 23. Control unit 23 can then, as a function of the information read out from transponder 24 of a transport basket 18, plan and correspondingly carry out the processing steps for that transport basket 18. Located in the vicinity of output station 3 is a writing unit 26 with which information about the individual processing steps that a transport basket 18 has passed through in tissue infiltration apparatus 1 can be written into transponder 24.

It is also conceivable for at least one reaction vessel 1A, 1B, 1C to be fillable automatically with a different dielectric fluid. This could take place, in particular, at a definable or adjustable time. For example, the reaction vessel for dehydration could, in particular, be respectively filled with an alcohol-containing dielectric fluid having a different alcohol concentration. Additionally or alternatively, filling of the reaction vessel with a different dielectric fluid could be possible in operator initiated fashion manually.

It is indicated merely schematically that dielectric fluid 19 of reaction vessel 1B serving for dehydration can be exchanged, for which purpose an exchange apparatus 27 is provided. The latter comprises pumps and valves (not illustrated), and is connected by means of two conduit connections to reaction vessel 1B. Preferably, energy is applicable to the contents of at least one reaction vessel, in particular for a definable period of time. The energy is, in particular, thermal energy or electromagnetic waves, for example microwaves and/or ultrasonic waves. The contents of the reaction vessel to which heat or energy is to be applied could include the dielectric fluid, a transport basket present therein, and/or cassettes present therein. It is particularly useful to apply energy to the reaction vessel that is provided for wax/paraffin treatment, since this operation is thereby accelerated. Provided on reaction vessel 1C is a heating unit 29, embodied in the form of an irradiating device irradiation infrared irradiation or microwave irradiation, with which dielectric fluid 19 in reaction vessel 1C can be heated. However, no substantial direct irradiation other than insignificant stray intensity is irradiated onto the samples. The direct irradiation comes from the window section 5 in the reaction vessels side wall so that controlled and uniform irradiating of all samples can be maintained throughout the process. Providing additional irradiation just to heat up the paraffin brings the temperature of the paraffin faster to the optimum infiltration temperature so that in combination with a combined direct irradiation of the samples as describe above accelerates infiltration.

Very particularly preferably, provision is made that priority criteria, on the basis of which the order of the transport baskets is ascertainable, are inputtable and/or ascertainable. The priority criteria could be inputted, for example, by an operator. It is additionally conceivable that the priority criteria are transmitted to the tissue infiltration apparatus via a network or a database system. This could be useful in particular if the tissue infiltration apparatus is incorporated into a laboratory control system. It is very generally conceivable that the order of two transport baskets is definably modifiable under the control of the laboratory control system in remote controlled fashion. Control could also be applied to further preparation devices with a laboratory control system of this kind, so that ideally, almost entirely automated specimen preparation is possible. This kind of incorporation of the tissue infiltration apparatus or its control device could be achieved by linkage to a control computer for the laboratory control system via a network, or to a database system.

Tissue infiltration apparatus according to figure 3 can be incorporated, via network connection 28, into a laboratory control system (not shown in the figures) that comprises a control computer and is linked to a database system in which patient data, among other information, is stored.

It should be noted that the exemplifying embodiments discussed above serve merely to describe the teaching claimed, but do not limit it to the exemplifying embodiments.

List of reference numerals

1 reaction vessel
2 side wall
3 bottom
4 reaction chamber
5 transparent window section
6 microwaves
7 microwave system
8 heating-and-cooling unit
9 dielectric surface level
10 cassettes
11 rotational axle
12 segments
13 several layers
14 casing
15 transport mechanism
16 transport arm
17 carousel
18 transport baskets
19 dielectric
20 storage vessel
21 tissue samples
22 conduit
23 control unit
24 transponder
25 reading unit
26 writing unit
27 exchange apparatus
28 network connection
29 heating unit
30 drive mechanism

**Claims**

1. A tissue infiltration system comprising:

 at least a first and a second reaction chamber (4) adapted to receive sequentially one and the same tissue sample (21), the first reaction chamber (4) being adapted to receive a first dielectric fluid (19) to be infiltrated into the tissue sample (21) and the second reaction chamber (4) being adapted to receive a second dielectric fluid (19) to be infiltrated into a tissue sample (21), said first and second reaction chambers (4) comprising a bottom (3) and a circumferential wall (2);
 a holding element for sequentially holding a tissue transport basket (18) configured to accommodate the tissue sample (21) over a predetermined time period;
 a microwave system (7) configured for irradiating microwave irradiation; and
 a transport mechanism (15) adapted to create a relative motion between the first reaction chamber and the holding element and the second reaction chamber and the holding element such that the holding element holding the tissue transport basket (18) is moved from inside the first reaction chamber to inside the second reaction chamber, wherein the system is a closed system and the first and second dielectrics are pre-filled into the first and second reaction chamber, respectively;
 **characterized in that**
 the circumferential wall (2) comprises a window section (5) that is transparent for microwave irradiation and the microwave system is configured to irradiate microwave irradiation sequentially through the window sections (5) into the first and second reaction chambers;
 the holding element has a central axle (11) of rotation and is adapted to be inserted into the reaction chamber (4) so that the central axle (11) of rotation rotates substantially around the axis of symmetry of the reaction chamber (4) such that the tissue sample (21) passes the window section (5) at every round in a distance that is shorter than 3PD of the first and second dielectric fluid from the window section, wherein PD is the penetration depth of the microwaves into the dielectric fluid and defined as the depth where the initial microwave field intensity has been reduced to 1/e; and
 the system further comprises a drive mechanism connected to the central axle (11) of rotation configured for rotating the holding element in the reaction chamber (4) when infiltrating the tissue sample (21).

2. The tissue infiltration apparatus of claim 1, **characterized in that** the bottom (3) is round and the wall (2) is a regular cylinder having a central axis of symmetry.

3. The tissue infiltration apparatus of claim 1 or 2, **characterized in that** the window section (5) is rectangular having a long and a short edge, the long edge extending substantially vertically in parallel to the axis of symmetry and the short edge extends substantially circumferentially.

4. The tissue infiltration apparatus of one of the preceding claims, **characterized by** a convective heater (29) and/or a convective cooler for heating or cooling the dielectric to a predetermined temperature.

5. The tissue infiltration apparatus of one of the preceding claims, **characterized in that** the tissue transport basket (18) comprises polytetrafluoroethylene as a microwave transparent material.

6. A method for infiltrating a first dielectric fluid (19) into a tissue sample (21) by means of the apparatus of claim 1, comprising the method steps of:

 providing a first and a second reaction chamber (4) comprising a bottom (3) and a circumferential wall (2);
 filling the first reaction chamber (4) with a first dielectric fluid (19);
 inserting a tissue sample (21) into the first reaction chamber (4) and into the first dielectric fluid (19);
 holding the tissue submerged in the first dielectric fluid (19); and
 transporting the holding element from inside the first reaction chamber (4) filled with the first dielectric into a second reaction chamber (4) filled with a second dielectric fluid (19);
 **characterized by**
 providing a window section (5) in the circumferential wall (2) that is transparent for microwave irradiation;
 rotating the holding element within and in relation to the first reaction chamber (4) such that the tissue sample (21) passes the window section (5) at every round in a distance shorter than 3PD of the first and second dielectric fluid from the window section, wherein PD is the penetration depth of the microwaves into the dielectric fluid and defined as the depth where the initial microwave field intensity has been reduced to 1/e; and

irradiating microwave irradiation through the window section (5) into the first reaction chamber (4) for a predetermined period of time.

7. The method of claim 6, **characterized by** heating the dielectric with the convective heater (29) to a predetermined temperature.

8. The method of claim 6, **characterized by** providing a convective cooling system and cooling the dielectric to a predetermined temperature.

**Patentansprüche**

1. Gewebeinfiltrationssystem, umfassend:

wenigstens eine erste und eine zweite Reaktionskammer (4), die dafür ausgelegt sind, aufeinanderfolgend ein und dieselbe Gewebeprobe (21) aufzunehmen, wobei die erste Reaktionskammer (4) dafür ausgelegt ist, ein erstes dielektrisches Fluid (19) aufzunehmen, das in die Gewebeprobe (21) infiltriert werden soll, und die zweite Reaktionskammer (4) dafür ausgelegt ist, ein zweites dielektrisches Fluid (19) aufzunehmen, das in eine Gewebeprobe (21) infiltriert werden soll, wobei die erste und die zweite Reaktionskammer (4) einen Boden (3) und eine Umfangswand (2) umfassen;
ein Halteelement zum aufeinanderfolgenden Halten eines Gewebebeförderungskorbs (18), der dafür gestaltet ist, die Gewebeprobe (21) für einen vorbestimmten Zeitraum aufzunehmen;
ein Mikrowellensystem (7), das zum Ausstrahlen von Mikrowellenstrahlung gestaltet ist;
einen Beförderungsmechanismus (15), der dafür ausgelegt ist, eine relative Bewegung zwischen der ersten Reaktionskammer und dem Halteelement und der zweiten Reaktionskammer und dem Halteelement zu erzeugen, so dass das Halteelement, das den Gewebebeförderungskorb (18) hält, von dem Innenraum der ersten Reaktionskammer zu dem Innenraum der zweiten Reaktionskammer bewegt wird, wobei das System ein geschlossenes System ist und das erste und das zweite Dielektrikum in die erste bzw. die zweite Reaktionskammer vorgefüllt sind;
**dadurch gekennzeichnet, dass**
die Umfangswand (2) einen Fensterabschnitt (5) umfasst, der für Mikrowellenstrahlung transparent ist, und das Mikrowellensystem dafür gestaltet ist, Mikrowellenstrahlung aufeinanderfolgend durch die Fensterabschnitte (5) in die erste und die zweite Reaktionskammer zu strahlen;
wobei das Halteelement eine zentrale Drehachse (11) aufweist und dafür ausgelegt ist, in die Reaktionskammer (4) eingeführt zu werden, so dass sich die zentrale Drehachse (11) im Wesentlichen um die Symmetrieachse der Reaktionskammer (4) dreht, so dass die Gewebeprobe (21) bei jeder Runde in einem Abstand von dem Fensterabschnitt, der kürzer als 3PD des ersten und des zweiten dielektrischen Fluids ist, an dem Fensterabschnitt (5) vorbeitritt, wobei PD die Eindringtiefe der Mikrowellen in das dielektrische Fluid ist und als die Tiefe definiert ist, in der die Ausgangsintensität des Mikrowellenfelds auf 1/e verringert worden ist; und
wobei das System ferner einen Antriebsmechanismus umfasst, der mit der zentralen Drehachse (11) verbunden ist und dafür gestaltet ist, das Halteelement in der Reaktionskammer (4) zu drehen, wenn die Gewebeprobe (21) infiltriert wird.

2. Gewebeinfiltrationsvorrichtung gemäß Anspruch 1, **dadurch gekennzeichnet, dass** der Boden (3) rund ist und die Wand (2) ein regelmäßiger Zylinder mit einer zentralen Symmetrieachse ist.

3. Gewebeinfiltrationsvorrichtung gemäß Anspruch 1 oder 2, **dadurch gekennzeichnet, dass** der Fensterabschnitt (5) rechteckig ist und eine lange und eine kurze Kante aufweist, wobei die lange Kante im Wesentlichen parallel zu der Symmetrieachse senkrecht verläuft und die kurze Kante im Wesentlichen in Umfangsrichtung verläuft.

4. Gewebeinfiltrationsvorrichtung gemäß einem der vorstehenden Ansprüche, **gekennzeichnet durch** einen Konvektionsheizer (29) und/oder einen Konvektionskühler zum Heizen oder Kühlen des Dielektrikums auf eine vorbestimmte Temperatur.

5. Gewebeinfiltrationsvorrichtung gemäß einem der vorstehenden Ansprüche, **dadurch gekennzeichnet, dass** der Gewebebeförderungskorb (18) Polytetrafluorethylen als mikrowellentransparentes Material umfasst.

6. Verfahren zum Infiltrieren eines ersten dielektrischen Fluids (19) in eine Gewebeprobe (21) mithilfe der Vorrichtung gemäß Anspruch 1, umfassend die Verfahrensschritte:

Bereitstellen einer ersten und einer zweiten Reaktionskammer (4), die einen Boden (3) und eine Umfangswand (2) umfassen;

Füllen der ersten Reaktionskammer (4) mit einem ersten dielektrischen Fluid (19);

Einführen einer Gewebeprobe (21) in die erste Reaktionskammer (4) und in das erste dielektrische Fluid (19);

Eingetauchthalten des Gewebes in dem ersten dielektrischen Fluid (19); und

Befördern des Halteelements von dem Innenraum der ersten Reaktionskammer (4), der mit dem ersten Dielektrikum gefüllt ist, in eine zweite Reaktionskammer (4), die mit einem zweiten dielektrischen Fluid (19) gefüllt ist;

**gekennzeichnet durch**

Bereitstellen eines Fensterabschnitts (5) in der Umfangswand (2), der für Mikrowellenstrahlung transparent ist;

Drehen des Halteelements innerhalb der und bezogen auf die erste Reaktionskammer (4), so dass die Gewebeprobe (21) bei jeder Runde in einem Abstand von dem Fensterabschnitt, der kürzer als 3PD des ersten und des zweiten dielektrischen Fluids ist, an dem Fensterabschnitt (5) vorbeitritt, wobei PD die Eindringtiefe der Mikrowellen in das dielektrische Fluid ist und als die Tiefe definiert ist, in der die Ausgangsintensität des Mikrowellenfelds auf 1/e verringert worden ist; und

Strahlen von Mikrowellenstrahlung durch den Fensterabschnitt (5) in die erste Reaktionskammer (4) für einen vorbestimmten Zeitraum.

**7.** Verfahren gemäß Anspruch 6, **gekennzeichnet durch** Erhitzen des Dielektrikums mithilfe des Konvektionsheizers (29) auf eine vorbestimmte Temperatur.

**8.** Verfahren gemäß Anspruch 6, **gekennzeichnet durch** Bereitstellen eines Konvektionskühlsystems und Kühlen des Dielektrikums auf eine vorbestimmte Temperatur.

**Revendications**

**1.** Système d'infiltration tissulaire comprenant :

au moins une première et une seconde chambre de réaction (4) conçues pour recevoir séquentiellement un seul et même échantillon tissulaire (21), la première chambre de réaction (4) étant conçue pour recevoir un premier fluide diélectrique (19) devant être infiltré dans l'échantillon tissulaire (21) et la seconde chambre de réaction (4) étant conçue pour recevoir un second fluide diélectrique (19) devant être infiltré dans un échantillon tissulaire (21), lesdites première et seconde chambres de réaction (4) comprenant un fond (3) et une paroi circonférentielle (2) ;

un élément de support permettant de tenir séquentiellement un panier de transport tissulaire (18) conçu pour accueillir l'échantillon tissulaire (21) au cours d'une période temporelle prédéfinie ;

un système à micro-ondes (7) conçu pour émettre un rayonnement micro-onde ; et

un mécanisme de transport (15) conçu pour créer un mouvement relatif entre la première chambre de réaction et l'élément de support et la seconde chambre de réaction et l'élément de support de sorte que l'élément de support tenant le panier de transport tissulaire (18) soit déplacé depuis l'intérieur de la première chambre de réaction vers l'intérieur de la seconde chambre de réaction, le système étant un système fermé et les premier et second diélectriques étant préremplis dans la première et la seconde chambre de réaction, respectivement ;

**caractérisé en ce que**

la paroi circonférentielle (2) comprend une section fenêtre (5) qui est transparente pour une exposition aux micro-ondes et le système à micro-ondes est conçu pour émettre un rayonnement micro-onde séquentiellement à travers les sections fenêtre (5) dans les première et seconde chambres de réaction ;

l'élément de support possède un arbre central (11) de rotation et est conçu pour s'engager dans la chambre de réaction (4) de sorte que l'arbre central (11) de rotation tourne sensiblement autour de l'axe de symétrie de la chambre de réaction (4) de sorte que l'échantillon tissulaire (21) passe devant la section fenêtre (5) à chaque tour à une distance qui est inférieure à 3PD du premier et du second fluide diélectrique depuis la section fenêtre, PD étant la profondeur de pénétration des micro-ondes dans le fluide diélectrique et étant définie comme la profondeur à laquelle l'intensité du champ de micro-ondes initial a été réduite à 1/e ; et

le système comprend en outre un mécanisme d'entraînement relié à l'arbre central (11) de rotation conçu pour faire tourner l'élément de support dans la chambre de réaction (4) lors de l'infiltration de l'échantillon tissulaire (21).

**2.** Appareil d'infiltration tissulaire selon la revendication 1, **caractérisé en ce que** le fond est rond et la paroi (2) est un cylindre régulier ayant un axe central de symétrie.

**3.** Appareil d'infiltration tissulaire selon la revendication 1 ou 2, **caractérisé en ce que** la section fenêtre (5) est rectangulaire avec un bord long et un bord court, le bord long s'étendant sensiblement verticalement et parallèlement à l'axe de symétrie et le bord court s'étendant sensiblement circonférentiellement.

**4.** Appareil d'infiltration tissulaire selon l'une des revendications précédentes, **caractérisé par** un élément chauffant convectif (29) et/ou un élément refroidissant convectif permettant de chauffer ou de refroidir le diélectrique à une température prédéfinie.

**5.** Appareil d'infiltration tissulaire selon l'une des revendications précédentes, **caractérisé en ce que** le panier de transport tissulaire (18) comprend du polytétrafluoroéthylène en tant que matériau transparent aux micro-ondes.

**6.** Procédé d'infiltration d'un premier fluide diélectrique (19) dans un échantillon tissulaire (21) au moyen de l'appareil selon la revendication 1, comprenant les étapes de procédé consistant à :

fournir une première et une seconde chambre de réaction (4) comprenant un fond (3) et une paroi circonférentielle (2) ;
remplir la première chambre de réaction (4) avec un premier fluide diélectrique (19) ;
introduire un échantillon tissulaire (21) dans la première chambre de réaction (4) et dans le premier fluide diélectrique (19) ;
maintenir le tissu immergé dans le premier fluide diélectrique (19) ; et
transporter l'élément de support depuis l'intérieur de la première chambre de réaction (4) remplie du premier diélectrique vers une seconde chambre de réaction (4) remplie d'un second fluide diélectrique (19) ;
**caractérisé par**
la fourniture d'une section fenêtre (5) dans la paroi circonférentielle (2) qui est transparente à un rayonnement micro-onde ;
la rotation de l'élément de support dans la première chambre de réaction (4) et en relation avec celle-ci de sorte que l'échantillon tissulaire (21) passe devant la section fenêtre (5) à chaque tour à une distance qui est inférieure à 3PD du premier et du second fluide diélectrique depuis la section fenêtre, PD étant la profondeur de pénétration des micro-ondes dans le fluide diélectrique et étant définie comme la profondeur à laquelle l'intensité du champ de micro-ondes initial a été réduite à 1/e ; et
l'émission d'un rayonnement de micro-ondes à travers la section fenêtre (5) vers la première chambre de réaction (4) pendant une période temporelle prédéfinie.

**7.** Procédé selon la revendication 6, **caractérisé par** le chauffage du diélectrique avec l'élément chauffant convectif (29) à une température prédéfinie.

**8.** Procédé selon la revendication 6, **caractérisé par** la fourniture d'un système de refroidissement convectif et par le refroidissement du diélectrique à une température prédéfinie.

Fig. 1

Fig. 2

Fig. 3

Fig. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102007008713
- DE 102007044116
- DE 102007008713 A1